# EUROPEAN PATENT SPECIFICATION

(11) **EP 3 725 626 B1**
(45) Date of publication and mention of the grant of the patent: **07.02.2024**
(21) Application number: 18888380.5
(22) Date of filing: 12.12.2018
(51) Int. Cl.: B60W 30/06, B62D 15/02

(54) **AUTOMATIC PARKING METHOD AND DEVICE, INTELLIGENT VEHICLE AND COMPUTER STORAGE MEDIUM**
AUTOMATISCHES PARKVERFAHREN UND VORRICHTUNG, INTELLIGENTES FAHRZEUG UND COMPUTERSPEICHERMEDIUM
PROCÉDÉ ET UN DISPOSITIF DE STATIONNEMENT AUTOMATIQUE, VÉHICULE INTELLIGENT ET SUPPORT DE STOCKAGE INFORMATIQUE

(30) Priority: 15.12.2017 CN 201711346034
(43) Date of publication of application: 21.10.2020
(73) Proprietor: NIO (Anhui) Holding Co., Ltd., Hefei City, Anhui Province (CN)
(72) Inventor: WANG, Kai, Jiading, Shanghai (CN); ZHOU, Yuyuan, Jiading, Shanghai (CN); DING, Chenxi, Jiading, Shanghai (CN); LI, Qian, Jiading, Shanghai (CN)
(74) Representative: Vossius & Partner Patentanwälte Rechtsanwälte mbB
(86) International application number: PCT/CN2018/120473
(87) International publication number: WO 2019/114731

(56) References cited:
- WO-A1-2009/044513
- CN-A- 102 933 442
- CN-A- 108 569 280
- CN-U- 202 923 500
- DE-A1-102016 013 180
- JP-A- 2013 018 406
- KR-A- 20170 124 299
- US-A1- 2013 085 637

## Description

### Technical Field

The invention relates to the technical field of vehicles, in particular to an automatic parking method, an automatic parking device, an intelligent vehicle and a computer storage medium.

### Background Art

As a new energy vehicle, electric vehicles have been one of the key strategic emerging industries supported by China because of their advantages such as low noise, high energy efficiency and no mobile waste emission.

Combined with large-scale intensive charging, a battery rental-based battery swap mode has currently become a competitive commercial technology mode for the development of electric vehicles. The battery swap mode is by replacing a vehicle battery that is about to or has run out with a fully charged battery. With a mechanical operation, the battery replacement can be completed within only a few minutes to provide less troubles caused by long charging time compared with a charging mode.

At present, a plurality of battery charging and swap stations have been established in China to provide charging and swapping services for traction batteries of electric vehicles. However, due to the high requirements of the battery charging and swap stations for parking positions of vehicles, the vehicle positioning precision which mainly depends on the ultrasonic technology for the moment fails to meet the actual requirements.

The Chinese patent CN 106004515 A discloses a vehicle speed control method and system for the automatic parking of an electric vehicle. The system comprises a vehicle speed sensor module, an ultrasonic sensor, a vehicle positioning module, a parking controller and a vehicle speed controller, wherein the vehicle speed sensor module is used to detect the movement speed of an electric vehicle, the ultrasonic sensor is used to acquire the information about obstacles around the electric vehicle, the vehicle positioning module is used to acquire current position information of the electric vehicle, the parking controller is used to set an ideal parking speed based on the acquired information about the obstacles, the current position information and a preset parking trajectory, and the vehicle speed controller is used to regulate the torque of an electric motor of the electric vehicle based on the movement speed and the ideal parking speed of the vehicle.

Although the above-mentioned patent can realize a parking speed control function with a minor error at a low speed, the error in the vehicle positioning precision of the ultrasonic sensor is generally 10-20 cm, and the positioning precision fails to meet the requirement of battery swapping.

The information disclosed above in the background art of the invention is merely intended to facilitate understanding of the general background of the invention and should not be taken as an acknowledgement or any form of suggestion that the information constitutes the prior art already known to those of ordinary skill in the art.

KR 2017 0124299 A relates to an apparatus for assisting parking which comprises an around view monitoring system portion for acquiring images of surroundings of a vehicle using a camera and generating a top-view image using the acquired images, an image processing portion for generating an edge image from the top view image, a parking lot line calculation portion for calculating a parking lot line from the top view image and the edge image, a virtual parking reference line generating portion for generating a virtual parking reference line from the parking lot line, and a parking target area determining portion for determining a parking target area based on the parking lot line and the virtual parking reference line, thereby recognizing the parking target area and providing the parking target area information to a user. KR 2017 0124299 A discloses in particular an automatic parking method, comprising:
identifying that a vehicle is located in a predetermined area, the predetermined area being defined by a plurality of limiting signs;
recording videos of surroundings around the vehicle in real time using video capture apparatuses mounted on two sides of the vehicle;
locating a first limiting sign in the videos using a colour space;
obtaining a real-time position of the vehicle from features of the first limiting sign; and
guiding the vehicle to a target area according to the real-time position of the vehicle.

WO 2009/044513 A1 relates to a parking assistant which includes a camera shooting surroundings, parking target position setter setting parking target position in surroundings image by shooting part, rearward movement starting position calculator calculating rearward movement starting position based on: target position by position setter, and vehicle's movable area, rearward movement starting position denoting position stopping vehicle and starting rearward movement of vehicle, to park vehicle in target position, movement calculator sensing movement direction and movement amount of vehicle, and image generator superposing an information image on surroundings image based on movement direction and amount which are sensed with movement calculator. Information image denotes rearward movement starting position for allowing vehicle to be parked in target position. According to vehicle's movement, image generator generates, with different displays, following sub-positions of rearward movement starting position: first sub-position allowing vehicle to move to target position, and second sub-position failing to allow vehicle to be parked in target position.

US 2013/085637 A1 relates to a method for assisting a driver of a motor vehicle when parking in a parking space, in particular in a garage, using a driver assistance device of the motor vehicle, wherein: in a learning mode of the driver assistance device, reference data related to the surrounding area of the parking space are recorded and stored using a sensor device of the driver assistance device, while the motor vehicle is parked in the parking space while controlled by the driver, a reference target position, which is reached by the motor vehicle in the learning mode, is recorded by the driver assistance device and data with information about this reference target position are stored, in a subsequent operating mode of the driver assistance device different from the learning mode, sensor data are detected by the sensor device and compared with the reference data, wherein depending on this comparison the surrounding area of the parking space is identified using the detected sensor data and thereby a current position of the motor vehicle relative to the reference target position is determined and depending on the current position of the motor vehicle relative to the reference target position, a parking route is determined by the driver assistance device, along which the motor vehicle is parked in the parking space from the current position.

### Summary of the Invention

The invention for which protection is sought is defined by the independent claims. The dependent claims concern particular embodiments.

In order to solve at least one of the above problems of the prior art, the invention provides an automatic parking method comprising: identifying that a vehicle is located in a predetermined area, the predetermined area being defined by a plurality of limiting signs; recording videos of surroundings around the vehicle in real time using video capture apparatuses mounted on two sides of the vehicle; locating a first limiting sign in the videos using a colour space; obtaining, by means of morphological detection, a real-time position of the vehicle from features of the first limiting sign; and guiding the vehicle to a target area according to the real-time position of the vehicle.

In the method described above, the predetermined area is a rectangular parking space, and four corners of the parking space are defined by the corresponding L-shaped limiting signs, respectively.

In the method described above, the plurality of limiting signs each have a colour characteristic different from the surroundings around the vehicle, and the step of locating the first limiting sign in the videos using the colour space comprises: locating the first limiting sign in the videos by means of colour patch analysis.

In the method described above, the step of obtaining, by means of morphological detection, the real-time position of the vehicle from the features of the first limiting sign comprises: determining the features of the first limiting sign by means of morphological detection; determining an absolute position of the first limiting sign according to an unfilled corner feature of the first limiting sign; estimating the distances from the video capture apparatuses to the target area by calibrating pixels of the videos and from the absolute position of the first limiting sign; and determining the real-time position of the vehicle at least from the distances from the video capture apparatuses to the target area.

In the method described above, the video capture apparatuses are mounted on rear view mirrors of the vehicle with a field of view covering at least one of the plurality of limiting signs.

According to another aspect of the invention, provided is an automatic parking device comprising: an identification apparatus for identifying that a vehicle is located in a predetermined area, the predetermined area being defined by a plurality of limiting signs; video capture apparatuses mounted on two sides of the vehicle and used to record videos of surroundings around the vehicle in real time; a locating apparatus for locating a first limiting sign in the videos using a colour space; a detection apparatus for obtaining, by means of morphological detection, a real-time position of the vehicle from features of the first limiting sign; and a guiding apparatus for guiding the vehicle to a target area according to the real-time position of the vehicle.

In the device described above, the predetermined area is a rectangular parking space, and four corners of the parking space are defined by the corresponding L-shaped limiting signs, respectively.

In the device described above, the plurality of limiting signs each have a colour characteristic different from the surroundings around the vehicle, and the locating apparatus is configured to locate the first limiting sign in the videos by means of colour patch analysis.

In the device described above, the detection apparatus comprises: a first determination unit for determining the features of the first limiting sign by means of morphological detection; a second determination unit for determining an absolute position of the first limiting sign according to an unfilled corner feature of the first limiting sign; an estimation unit for estimating the distances from the video capture apparatuses to the target area by calibrating pixels of the videos and from the absolute position of the first limiting sign; and a third determination unit for determining the real-time position of the vehicle at least from the distances from the video capture apparatuses to the target area.

In the device described above, the video capture apparatuses are mounted on rear view mirrors of the vehicle with a field of view covering at least one of the plurality of limiting signs.

According to a further aspect of the invention, provided is an intelligent vehicle comprising an automatic parking device as previously mentioned.

According to yet a further aspect of the invention, provided is a computer storage medium comprising instructions which, when being executed, carry out an automatic parking method as previously mentioned.

By means of the technical solutions of the invention, high-precision positioning can be provided for the new energy vehicle during automatic parking in a battery swap station. A conventional positioning method mainly depends on the ultrasonic technology, strongly relies on surrounding physical materials and forms, and also has a low positioning precision. According to the technical solutions of the invention, the video positioning technology is applied to the positioning of the vehicle, a parking space is arranged at a designated position in a battery swapping area, and the video capture apparatuses (such as cameras) on the periphery of the vehicle are used to record videos and extract the features of the parking space for the high-precision positioning of the vehicle with a final locating error of only 1-2 cm.

In addition, the L-shaped signs, which are commonly used when the parking space is configured currently, may be used as key position information for video detection so as to locate the position where the vehicle is located during automatic parking. Since such L-shaped signs are generally provided when a parking space is delimited, the solutions of the invention are applicable to a variety of practical application scenarios, including but not limited to parking in parking lots, neighbourhoods, battery swap stations, etc., without the need to additionally provide other locating signs.

Other features and advantages of the method and apparatus of the invention will become apparent or can be set forth more specifically from the drawings herein and the following particular embodiments for explaining some principles of the invention together with the drawings.

### Brief Description of the Drawings

Fig. 1 is a schematic view representing an automatic parking method according to an embodiment of the invention;
Fig. 2 is a schematic structural view representing an automatic parking device according to an embodiment of the invention;
Fig. 3 is a design view representing a limiting sign of an embodiment of the invention; and
Fig. 4 is a schematic view representing a scenario of automatic parking according to an embodiment of the invention.

### Detailed Description of Embodiments

In this specification, the terms such as "comprise" and "include" indicate that in addition to the elements and steps that are directly and explicitly described in the specification and the claims, other elements and steps that are not directly or explicitly described are not excluded in the technical solutions of the invention.

The terms such as "first" and "second" are not used to indicate sequences of units in terms of time, space, size, and the like, and are only used to distinguish between the units.

In the context of the description, "morphological detection" refers to the detection of the morphology (including orientation, shape, etc.) of a target object. In an embodiment, the morphological detection of the limiting signs indicates extraction of the shape features of the limiting signs.

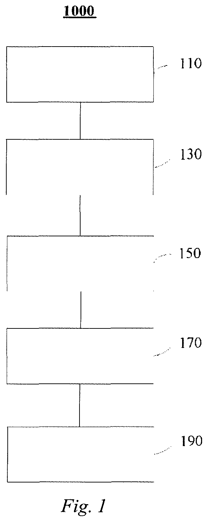

Fig. 1 is a schematic view representing an automatic parking method 1000 according to an embodiment of the invention. The automatic parking method 1000 comprises the following steps:
a step 110 of identifying that a vehicle is located in a predetermined area, the predetermined area being defined by a plurality of limiting signs;
a step 130 of recording videos of surroundings around the vehicle in real time using video capture apparatuses mounted on two sides of the vehicle;
a step 150 of locating a first limiting sign in the videos using a colour space;
a step 170 of obtaining, by means of morphological detection, a real-time position of the vehicle from features of the first limiting sign; and
a step 190 of guiding the vehicle to a target area according to the real-time position of the vehicle.

According to the video positioning method described above, based on the colour space detection and the morphological detection, the vehicle in a predetermined area is positioned in such a way that the vehicle is allowed to be automatically parked into the target area, for example, into a battery swap station for automatic battery swapping. The positioning precision may be greatly improved based on video positioning, such that the requirement of the positioning precision for the automatic parking of the vehicle in the battery swap station is met.

In an embodiment, the predetermined area is a rectangular parking space, and four corners of the parking space are defined by the corresponding L-shaped limiting signs, respectively. By utilizing the L-shaped signs, which are commonly used when the parking space is configured currently, as key position information of the detection videos, the solutions of the invention are applicable to a variety of practical application scenarios, including but not limited to parking in parking lots, neighbourhoods, battery swap stations, etc., without the need to additionally provide other locating signs.

In an embodiment, the plurality of limiting signs have colour characteristics different from the surroundings around the vehicle. In this way, the identification of the limiting signs from the videos may be facilitated to improve the identification accuracy. In this embodiment, the first limiting sign may be located in the video by means of colour patch analysis in step 150.

In an embodiment, the step 170 comprises: determining the features of the first limiting sign by means of morphological detection; determining an absolute position of the first limiting sign according to an unfilled corner feature of the first limiting sign; estimating the distances from the video capture apparatuses to the target area by calibrating pixels of the videos and from the absolute position of the first limiting sign; and determining the real-time position of the vehicle at least from the distances from the video capture apparatuses to the target area. In an embodiment, the vehicle may obtain map information of the battery swap station from a cloud side, and the map information contains the absolute positions of the limiting signs. By means of the colour space detection and the morphological detection, the first limiting sign in the videos is determined from the plurality of limiting signs, and the absolute position of the first limiting sign is determined from the map information. After the absolute position of the first limiting sign is determined, relative position transformation may be carried out, that is, the current absolute position of the vehicle and the position of the vehicle relative to the target area (such as a parking space for battery swapping) is obtained according to the absolute position of the detected sign and the position thereof relative to a vehicle body, such that the specific position of the vehicle during the parking may be given in real time.

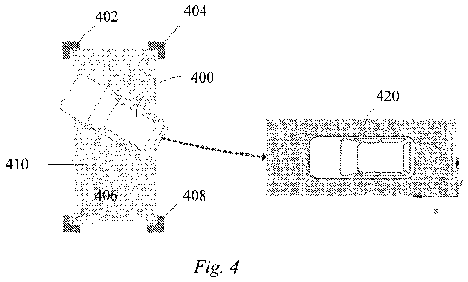

In an embodiment, the video capture apparatuses are mounted on rear view mirrors of the vehicle with a field of view covering at least one of the plurality of limiting signs. Referring to Fig. 4, if the vehicle 400 is parked in the middle of the predetermined area 410, the video capture apparatus located on the left side can capture the limiting signs 402 and 406 located on the left side because the video capture apparatuses (not shown) are mounted on the rear view mirrors of the vehicle 400 and each have a field of view generally covering a semi-circular area. Similarly, the video capture apparatus located on the right side can capture the limiting signs 404 and 408 located on the right side. The limiting signs 402-408 define the shape of the predetermined area 410. In another embodiment, if the vehicle 400 is parked in the lower half of the predetermined area 410, the video capture apparatuses on both sides of the vehicle can only capture the limiting signs 406 and 408 located in the left rear and right rear of the predetermined area, respectively, i.e., the video capture apparatus on one side can only capture the video of one limiting sign because the video capture apparatuses (not shown) are mounted on the rear view mirrors of the vehicle 400. In yet another embodiment, if the vehicle 400 is parked in the upper half of the predetermined area 410, the video capture apparatuses on both sides of the vehicle can only capture the limiting signs 402 and 404 located in the front left and front right of the predetermined area, respectively. Finally, the vehicle 400 is automatically parked into the target area 420.

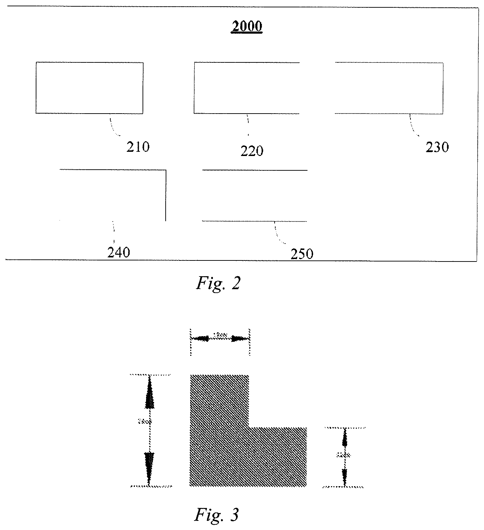

Fig. 2 shows an automatic parking device 2000. The device 2000 comprises: an identification apparatus 210, video capture apparatuses 220, a locating apparatus 230, a detection apparatus 240, and a guiding apparatus 250. The identification apparatus 210 is used to identify that a vehicle is located in a predetermined area. The predetermined area is defined by a plurality of limiting signs. The video capture apparatuses 220 are mounted on two sides of the vehicle and are used to record videos of surroundings around the vehicle in real time. The locating apparatus 230 is used to locate a first limiting sign in the videos using a colour space. The detection apparatus 240 is used to obtain, by means of morphological detection, a real-time position of the vehicle from features of the first limiting sign. The guiding apparatus 250 is used to guide the vehicle to a target area according to the real-time position of the vehicle.

In an embodiment, the predetermined area is a rectangular parking space, and four corners of the parking space are defined by the corresponding L-shaped limiting signs, respectively. By utilizing the L-shaped signs, which are commonly used when the parking space is configured currently, as key position information of the detection videos, the solutions of the invention are applicable to a variety of practical application scenarios, including but not limited to parking in parking lots, neighbourhoods, battery swap stations, etc., without the need to additionally provide other locating signs.

In an embodiment, the plurality of limiting signs have colour characteristics different from the surroundings around the vehicle. In this way, the identification of the limiting signs from the videos may be facilitated to improve the identification accuracy. In this embodiment, the locating apparatus 230 may be further configured to locate the first limiting sign in the video by means of colour patch analysis.

In an embodiment, the detection apparatus 240 may comprise: a first determination unit for determining the features of the first limiting sign by means of morphological detection; a second determination unit for determining an absolute position of the first limiting sign according to an unfilled corner feature of the first limiting sign; an estimation unit for estimating the distances from the video capture apparatuses to the target area by calibrating pixels of the videos and from the absolute position of the first limiting sign; and a third determination unit for determining the real-time position of the vehicle at least from the distances from the video capture apparatuses to the target area.

In an embodiment, the video capture apparatuses 220 are mounted on rear view mirrors of the vehicle with a field of view covering at least one of the plurality of limiting signs.

Those skilled in the art will appreciate that the foregoing embodiments of the method of the invention may be implemented as a computer program product. Thus, the invention may for example take the form of a computer program product embodied on one or more computer-available storage media (including but not limited to a magnetic disk memory, an optical memory, and the like) containing computer-available program codes therein.

Fig. 3 illustrates a design view of a guiding sign for vehicle position detection. As shown in Fig. 3, this sign is a limiting sign in a predetermined area. For example, it may be contemplated that the limiting signs are arranged at designated positions of a battery swap station (if no such limiting sign is present) to define a parking area for a vehicle about to undergo battery swapping. In an embodiment, cameras on the rear view mirrors of the vehicle are used to record a video, and the methods of colour space detection and morphological detection are applied to detect the features of the parking space in the videos.

As shown in Fig. 4, the area 410 is a vehicle parking start area (i.e., the predetermined area) defined by the limiting signs 402 to 408 at four corners, and the area 420 is the parking space (i.e., the target area) of the battery swap station. The limiting signs play a role in two stages, i.e., in an initial positioning area, wherein the vehicle is stopped in the parking space area for battery swapping, and an identification system automatically identifies an initial position of the vehicle to provide parking start information; and during the parking, as shown in Fig. 4, the identification system identifies a parking trajectory of the vehicle and assists the vehicle in entering the battery swap station safely.

In summary, according to the solutions of the invention, the video capture apparatuses mounted on the two sides of the vehicle are mainly used to record videos of the surroundings, the important position information in the video is detected through the methods of colour space detection and morphological detection, including the limiting signs, the position of the target area and the like, a space transformation calculation is performed according to the positions, and the position of the vehicle relative to the target area is further calculated, such that the position where the vehicle is located during the automatic parking is located.

Compared with the conventional positioning method mainly relying on the ultrasonic technology, the technical solutions of the invention apply the video locating technology to the positioning of the vehicle, the parking space is arranged at the designated position of the battery swapping area, and the video capture apparatuses (such as cameras) on the periphery of the vehicle are used to record videos and extract the features of the parking space for the high-precision positioning of the vehicle with a final locating error of only 1-2 cm.

## Claims

1. An automatic parking method, comprising:
identifying that a vehicle is located in a predetermined area (410), the predetermined area (410) being defined by a plurality of limiting signs (402, 404, 406, 408);
recording videos of surroundings around the vehicle in real time using video capture apparatuses mounted on two sides of the vehicle;
locating a first limiting sign in the videos using a colour space;
obtaining, by means of morphological detection, a real-time position of the vehicle from features of the first limiting sign; and
guiding the vehicle to a target area (420) according to the real-time position of the vehicle,
wherein the step of obtaining, by means of morphological detection, the real-time position of the vehicle from the features of the first limiting sign comprises:
determining the features of the first limiting sign by means of morphological detection;
determining an absolute position of the first limiting sign according to an unfilled corner feature of the first limiting sign;
estimating the distances from the video capture apparatuses to the target area (420) by calibrating pixels of the videos and from the absolute position of the first limiting sign; and
determining the real-time position of the vehicle at least from the distances from the video capture apparatuses to the target area (420).

2. The method according to claim 1, **characterized in that** the predetermined area (410) is a rectangular parking space, and four corners of the parking space are defined by corresponding L-shaped limiting signs, respectively.

3. The method according to claim 1 or 2, **characterized in that** the plurality of limiting signs (402, 404, 406, 408) each have a colour characteristic different from the surroundings around the vehicle, and the step of locating the first limiting sign in the videos using the colour space comprises:
locating the first limiting sign in the videos by means of colour patch analysis.

4. The method according to claim 1, **characterized in that** the video capture apparatuses are mounted on rear view mirrors of the vehicle with a field of view covering at least one of the plurality of limiting signs (402, 404, 406, 408).

5. An automatic parking device, comprising:
an identification apparatus for identifying that a vehicle is located in a predetermined area (410), the predetermined area (410) being defined by a plurality of limiting signs (402, 404, 406, 408);
video capture apparatuses mounted on two sides of the vehicle and used to record videos of surroundings around the vehicle in real time;
a locating apparatus for locating a first limiting sign in the videos using a colour space;
a detection apparatus for obtaining, by means of morphological detection, a real-time position of the vehicle from features of the first limiting sign; and
a guiding apparatus for guiding the vehicle to a target area (420) according to the real-time position of the vehicle,
wherein the detection apparatus comprises:
a first determination unit for determining the features of the first limiting sign by means of morphological detection;
a second determination unit for determining an absolute position of the first limiting sign according to an unfilled corner feature of the first limiting sign;
an estimation unit for estimating the distances from the video capture apparatuses to the target area (420) by calibrating pixels of the videos and from the absolute position of the first limiting sign; and
a third determination unit for determining the real-time position of the vehicle at least from the distances from the video capture apparatuses to the target area (420).

6. The device according to claim 5, **characterized in that** the predetermined area (410) is a rectangular parking space, and four corners of the parking space are defined by the corresponding L-shaped limiting signs, respectively.

7. The device according to claim 5 or 6, **characterized in that** the plurality of limiting signs (402, 404, 406, 408) each have a colour characteristic different from the surroundings around the vehicle, and the locating apparatus is configured to locate the first limiting sign in the videos by means of colour patch analysis.

8. The device according to claim 5, **characterized in that** the video capture apparatuses are mounted on rear view mirrors of the vehicle with a field of view covering at least one of the plurality of limiting signs (402, 404, 406, 408).

9. An intelligent vehicle, **characterized by** comprising an automatic parking device according to any one of claims 5 to 8.

10. A computer storage medium, **characterized by** comprising instructions which, when being executed, carry out an automatic parking method according to any one of claims 1 to 4.

## Patentansprüche

1. Automatisches Parkverfahren, das Folgendes umfasst:
Identifizieren, dass sich ein Fahrzeug in einem vorbestimmten Bereich (410) befindet, wobei der vorbestimmte Bereich (410) durch eine Vielzahl von Begrenzungszeichen (402, 404, 406, 408) definiert ist;
Aufzeichnen von Videos von einer Umgebung des Fahrzeugs in Echtzeit unter Verwendung von Videoerfassungseinrichtungen, die auf zwei Seiten des Fahrzeugs montiert sind;
Lokalisieren eines ersten Begrenzungszeichens im Video unter Verwendung eines Farbraums;
Erhalten einer Echtzeitposition des Fahrzeugs mittels einer morphologischen Detektion anhand von Merkmalen des ersten Begrenzungszeichens und
Führen des Fahrzeugs zu einem Zielbereich (420) gemäß der Echtzeitposition des Fahrzeugs,
wobei der Schritt des Erhaltens der Echtzeitposition des Fahrzeugs mittels einer morphologischen Detektion anhand der Merkmale des ersten Begrenzungszeichens Folgendes umfasst:
Bestimmen der Merkmale des ersten Begrenzungszeichens mittels einer morphologischen Detektion;
Bestimmen einer absoluten Position des ersten Begrenzungszeichens gemäß einem nicht ausgefüllten Eckenmerkmal des ersten Begrenzungszeichens;
Schätzen der Abstände von den Videoerfassungseinrichtungen zum Zielbereich (420) durch Kalibrieren von Pixeln der Videos und anhand der absoluten Position des ersten Begrenzungszeichens und
Bestimmen der Echtzeitposition des Fahrzeugs mindestens anhand der Abstände von den Videoerfassungseinrichtungen zum Zielbereich (420).

2. Verfahren nach Anspruch 1, **dadurch gekennzeichnet, dass** der vorbestimmte Bereich (410) ein rechteckiger Parkplatz ist und vier Ecken des Parkplatzes jeweils durch entsprechende L-förmige Begrenzungszeichen definiert sind.

3. Verfahren nach Anspruch 1 oder 2, **dadurch gekennzeichnet, dass** die Vielzahl von Begrenzungszeichen (402, 404, 406, 408) jeweils eine Farbcharakteristik aufweisen, die sich von der Umgebung des Fahrzeugs unterscheidet, und der Schritt des Lokalisierens des ersten Begrenzungszeichens in den Videos unter Verwendung des Farbraums Folgendes umfasst:
Lokalisieren des ersten Begrenzungszeichens in den Videos mittels einer Farbmusteranalyse.

4. Verfahren nach Anspruch 1, **dadurch gekennzeichnet, dass** die Videoerfassungseinrichtungen an Rückspiegeln des Fahrzeugs montiert sind, wobei ein Sichtfeld mindestens eines der Vielzahl von Begrenzungszeichen (402, 404, 406, 408) abdeckt.

5. Automatische Parkvorrichtung, die Folgendes umfasst:
eine Identifikationseinrichtung zum Identifizieren, dass sich ein Fahrzeug in einem vorbestimmten Bereich (410) befindet, wobei der vorbestimmte Bereich (410) durch eine Vielzahl von Begrenzungszeichen (402, 404, 406, 408) definiert ist;
Videoerfassungseinrichtungen, die auf zwei Seiten des Fahrzeugs montiert sind und zum Aufzeichnen von Videos von einer Umgebung des Fahrzeugs in Echtzeit verwendet werden;
eine Lokalisierungseinrichtung zum Lokalisieren eines ersten Begrenzungszeichens im Video unter Verwendung eines Farbraums;
eine Detektionseinrichtung zum Erhalten einer Echtzeitposition des Fahrzeugs mittels einer morphologischen Detektion anhand von Merkmalen des ersten Begrenzungszeichens und
eine Führungseinrichtung zum Führen des Fahrzeugs zu einem Zielbereich (420) gemäß der Echtzeitposition des Fahrzeugs,
wobei die Detektionseinrichtung Folgendes umfasst:
eine erste Bestimmungseinheit zum Bestimmen der Merkmale des ersten Begrenzungszeichens mittels einer morphologischen Detektion;
eine zweite Bestimmungseinheit zum Bestimmen einer absoluten Position des ersten Begrenzungszeichens gemäß einem nicht ausgefüllten Eckenmerkmal des ersten Begrenzungszeichens;
eine Schätzeinheit zum Schätzen der Abstände von den Videoerfassungseinrichtungen zum Zielbereich (420) durch Kalibrieren von Pixeln der Videos und anhand der absoluten Position des ersten Begrenzungszeichens und
eine dritte Bestimmungseinheit zum Bestimmen der Echtzeitposition des Fahrzeugs mindestens anhand der Abstände von den Videoerfassungseinrichtungen zum Zielbereich (420).

6. Vorrichtung nach Anspruch 5, **dadurch gekennzeichnet, dass** der vorbestimmte Bereich (410) ein rechteckiger Parkplatz ist und vier Ecken des Parkplatzes jeweils durch die entsprechenden L-förmigen Begrenzungszeichen definiert sind.

7. Vorrichtung nach Anspruch 5 oder 6, **dadurch gekennzeichnet, dass** die Vielzahl von Begrenzungszeichen (402, 404, 406, 408) jeweils eine Farbcharakteristik aufweisen, die sich von der Umgebung des Fahrzeugs unterscheidet, und die Lokalisierungseinrichtung dazu ausgelegt ist, das erste Begrenzungszeichen in den Videos mittels einer Farbmusteranalyse zu lokalisieren.

8. Vorrichtung nach Anspruch 5, **dadurch gekennzeichnet, dass** die Videoerfassungseinrichtungen an Rückspiegeln des Fahrzeugs montiert sind, wobei ein Sichtfeld mindestens eines der Vielzahl von Begrenzungszeichen (402, 404, 406, 408) abdeckt.

9. Intelligentes Fahrzeug, **dadurch gekennzeichnet, dass** es eine automatische Parkvorrichtung nach einem der Ansprüche 5 bis 8 umfasst.

10. Computerspeichermedium, **dadurch gekennzeichnet, dass** es Anweisungen umfasst, die, wenn sie ausgeführt werden, ein automatisches Parkverfahren nach einem der Ansprüche 1 bis 4 umsetzen.

## Revendications

1. Procédé de stationnement automatique, comprenant :
l'identification de la présence d'un véhicule dans une zone prédéterminée (410), la zone prédéterminée (410) étant définie par une pluralité de signes de limitation (402, 404, 406, 408) ;
l'enregistrement de vidéos des environs du véhicule en temps réel au moyen d'appareils de capture vidéo montés sur deux côtés du véhicule ;
la localisation d'un premier signe de limitation dans les vidéos au moyen d'un espace de couleur ;
l'obtention, au moyen d'une détection morphologique, d'une position en temps réel du véhicule à partir de caractéristiques du premier signe de limitation ; et
le guidage du véhicule vers une zone cible (420) en fonction de la position en temps réel du véhicule ;
dans lequel l'étape d'obtention, au moyen d'une détection morphologique, de la position en temps réel du véhicule à partir des caractéristiques du premier signe de limitation comprend :
la détermination des caractéristiques du premier signe de limitation au moyen d'une détection morphologique ;
la détermination d'une position absolue du premier signe de limitation en fonction d'une caractéristique d'angle non rempli du premier signe de limitation ;
l'estimation des distances entre les appareils de capture vidéo et la zone cible (420) par l'étalonnage de pixels des vidéos et à partir de la position absolue du premier signe de limitation ; et
la détermination de la position en temps réel du véhicule au moins à partir des distances entre les appareils de capture vidéo et la zone cible (420).

2. Procédé selon la revendication 1, **caractérisé en ce que** la zone prédéterminée (410) est un espace de stationnement rectangulaire, et quatre angles de l'espace de stationnement sont définis respectivement par des signes de limitation en forme de L correspondants.

3. Procédé selon la revendication 1 ou 2, **caractérisé en ce que** les signes de la pluralité de signes de limitation (402, 404, 406, 408) ont chacun une caractéristique de couleur différente des environs du véhicule, et l'étape de localisation du premier signe de limitation dans les vidéos à l'aide de l'espace de couleur comprend :
la localisation du premier signe de limitation dans les vidéos au moyen d'une analyse d'une charte de couleurs.

4. Procédé selon la revendication 1, **caractérisé en ce que** les appareils de capture vidéo sont montés sur des rétroviseurs arrière du véhicule selon un champ de vision couvrant au moins l'un de la pluralité de signes de limitation (402, 404, 406, 408).

5. Dispositif de stationnement automatique, comprenant :
un appareil d'identification pour identifier la présence d'un véhicule dans une zone prédéterminée (410), la zone prédéterminée (410) étant définie par une pluralité de signes de limitation (402, 404, 406, 408) ;
des appareils de capture vidéo montés sur deux côtés du véhicule et utilisés pour enregistrer des vidéos des environs du véhicule en temps réel ;
un appareil de localisation pour localiser un premier signe de limitation dans les vidéos au moyen d'un espace de couleur ;
un appareil de détection pour obtenir, au moyen d'une détection morphologique, une position en temps réel du véhicule à partir de caractéristiques du premier signe de limitation ; et
un appareil de guidage pour guider le véhicule vers une zone cible (420) en fonction de la position en temps réel du véhicule,
dans lequel l'appareil de détection comprend :
une première unité de détermination pour déterminer les caractéristiques du premier signe de limitation au moyen d'une détection morphologique ;
une deuxième unité de détermination pour déterminer une position absolue du premier signe de limitation en fonction d'une caractéristique d'angle non rempli du premier signe de limitation ;
une unité d'estimation pour estimer les distances entre les appareils de capture vidéo et la zone cible (420) par l'étalonnage de pixels des vidéos et à partir de la position absolue du premier signe de limitation ; et
une troisième unité de détermination pour déterminer la position en temps réel du véhicule au moins à partir des distances entre les appareils de capture vidéo et la zone cible (420).

6. Dispositif selon la revendication 5, **caractérisé en ce que** la zone prédéterminée (410) est un espace de stationnement rectangulaire, et quatre angles de l'espace de stationnement sont définis respectivement par les signes de limitation en forme de L correspondants.

7. Dispositif selon la revendication 5 ou 6, **caractérisé en ce que** les signes de la pluralité de signes de limitation (402, 404, 406, 408) ont chacun une caractéristique de couleur différente des environs du véhicule, et l'appareil de localisation est configuré pour localiser le premier signe de limitation dans les vidéos au moyen d'une analyse d'une charte de couleurs.

8. Dispositif selon la revendication 5, **caractérisé en ce que** les appareils de capture vidéo sont montés sur des rétroviseurs arrière du véhicule selon un champ de vision couvrant au moins l'un de la pluralité de signes de limitation (402, 404, 406, 408).

9. Véhicule intelligent, **caractérisé en ce qu'**il comprend un dispositif de stationnement automatique selon l'une quelconque des revendications 5 à 8.

10. Support de stockage informatique, **caractérisé en ce qu'**il comprend des instructions qui, lorsqu'elles sont exécutées, exécutent un procédé de stationnement automatique selon l'une quelconque des revendications 1 à 4.
